Europäisches Patentamt

(19) European Patent Office

Office européen des brevets

(11) Veröffentlichungsnummer: **0 118 065**
A2

(12) # EUROPÄISCHE PATENTANMELDUNG

(21) Anmeldenummer: 84101663.7

(22) Anmeldetag: 17.02.84

(51) Int. Cl.³: **C 08 G 18/10**
C 09 J 3/16, C 08 G 18/74

(30) Priorität: 25.02.83 DE 3306559

(43) Veröffentlichungstag der Anmeldung:
12.09.84 Patentblatt 84/37

(84) Benannte Vertragsstaaten:
AT BE CH DE FR GB IT LI NL SE

(71) Anmelder: Henkel Kommanditgesellschaft auf Aktien
Postfach 1100 Henkelstrasse 67
D-4000 Düsseldorf-Holthausen(DE)

(72) Erfinder: Bauriedel, Hans, Dr.
Am Falder 101
D-4000 Düsseldorf(DE)

(54) Verfahren zur Herstellung von Polyurethan-Präpolymeren mit endständigen Isocyanatgruppen und vermindertem Restmonomergehalt.

(57) Es wird ein Verfahren zur Herstellung von Polyurethan-Präpolymeren auf Basis von monocyclischen und dicyclischen Diisocyanaten beschrieben, bei dem in einem Präpolymeren auf Basis eines monocyclischen Diisocyanats mit vergleichsweise geringerer Reaktivität ein Präpolymeres auf Basis eines dicyclischen Diisocyanats hergestellt wird. Die Verfahrensprodukte weisen Isocyanatendgruppen auf und zeichnen durch einen verminderten Gehalt an freien monomeren Diisocyanaten aus.

EP 0 118 065 A2

Henkelstraße 67

4ooo Düsseldorf, den 23. Februar 1983

HENKEL KGaA

ZR-FE/Patente

Dr.Wik/Po

P a t e n t a n m e l d u n g

D 6718 EP

"Verfahren zur Herstellung von Polyurethan-Präpolymeren mit endständigen Isocyanatgruppen und vermindertem Restmonomergehalt"

Die Erfindung betrifft ein Verfahren zur Herstellung von Polyurethan-Präpolymeren auf Basis von monocyclischen und dicyclischen Diisocyanaten. Die Verfahrensprodukte weisen Isocyanatendgruppen auf und zeichnen sich durch einen verminderten Gehalt an freien monomeren Diisocyanaten aus.

Polyurethan-Präpolymere mit Isocyanatendgruppen sind seit langem bekannt. Sie können mit geeigneten Härtern - meist mehrfunktionellen Alkoholen - in einfacher Weise zu Hochpolymeren umgesetzt werden. Polyurethan-Präpolymere haben auf vielen Anwendungsgebieten Bedeutung erlangt, so bei Dichtungsmassen, Lacken und Klebstoffen.

Um Polyurethan-Präpolymere mit endständigen Isocyanatgruppen zu erhalten, ist es üblich, mehrfunktionelle Alkohole mit einem Überschuß an Diisocyanaten zur Reaktion zu bringen. Nach dem allgemeinen Fachwissen der Polymer-Chemie kann bei dieser Reaktion das Molekulargewicht zumindest näherungsweise über das Verhältnis von Hydroxylgruppen zu Isocyanatgruppen gesteuert werden. So entstehen bei einem Molverhältnis von genau 1 : 1 sehr hochmolekulare Produkte, während bei einem Mol-

...

verhältnis OH : NCO = 1 : 2 im statistischen Mittel
-Addukte von 2 Molekülen Isocyanat an 1 Molekül
Diol entstehen. Aufgrund dieses Wissens ist es dem
Fachmann möglich, Isocyanatendgruppentragende Polyurethan-Präpolymere mit in weiten Grenzen variierbarem
mittleren Molekulargewicht maßzuschneidern. Die entstehenden Produkte weisen jedoch, wie bei Polymeren
üblich, eine mehr-oder minderbreite Molekulargewichtsverteilung auf. Insbesondere bleibt unabhängig
von der Reaktionszeit am Reaktionsende eine gewisse
Menge der im Überschuß eingesetzten Komponente unumgesetzt übrig. Dabei steigt der Gehalt an nicht umgesetzten
Diisocyanaten - hier Restmonomeren genannt - mit dem
Überschuß dieser Komponente im Reaktionsgemisch (vgl.
H.G. Elias, Makromoleküle, Huthig & Wepf, Basel, 4. Auflage 1981, Seite 487 ff.)

Bei zahlreichen Anwendungen von Polyurethan-Präpolymeren
wird ein Gehalt an Restmonomeren als störend empfunden.
So erfordern flüchtige Diisocyanate, wie beispielsweise
Toluylendiisocyanat besondere gewerbehygienische Vorsichtsmaßnahmen, selbst wenn sie in Mengen von nur 0,5 -
5 Gew.-% in den Präpolymeren vorhanden sind. Andererseits
können nicht flüchtige Diisocyanate bei Verklebungen
durch Migration zu Störungen führen. Derartige Störungen
können z.B. beim Versiegeln verklebter Folienverbunde
auftreten.

Zur Absenkung des Gehalts an Restmonomeren ist es bei
flüchtigen Diisocyanaten möglich, diese durch Destillation bei erhöhter Temperatur etwa 80 - 150$^{\circ}$ unter vermindertem Druck in dünnen Schichten aus den Präpolymeren
zu entfernen. Dieses Verfahren ist jedoch aufwendig und

...

- 3 -

liefert mitunter unzureichende Ergebnisse. Außerdem ist es auf flüchtige Diisocyanate begrenzt. Bei nicht flüchtigen Diisocyanaten, etwa den dicyclischen Diisocyanaten, ist die Destillation wenig erfolgversprechend. Es werden daher meist höhermolekulare Produkte eingesetzt, die aufgrund der eingangs erläuterten theoretischen Zusammenhänge einen geringeren Restmonomergehalt aufweisen. Da diese auch höhere Viskositäten aufweisen, ist es üblich, die Präpolymeren gelöst in organischen aprotischen Lösungsmitteln einzusetzen. Die Mitverwendung von organischen Lösungsmitteln ist jedoch ökologisch nachteilig und wird bei vielen Anwendungen nicht mehr toleriert.

Somit ist es Aufgabe der Erfindung ein Verfahren zur Herstellung von Polyurethan-Präpolymeren mit Isocyanatendgruppen auf Basis von monocyclischen und dicyclischen Diisocyanaten bereitzustellen, bei dem Produkte mit vermindertem Restmonomergehalt erhalten werden, gleichzeitig aber das Ausgangsmolverhältnis OH-Gruppen : NCO-Gruppen kleiner 1 ist.

Gegenstand der Erfindung ist somit ein Verfahren zur Herstellung von Polyurethan-Präpolymeren mit endständigen Isocyanatgruppen aus mono- und dicyclischen Diisocyanaten, dadurch gekennzeichnet, daß man in einer ersten Stufe ein monocyclisches Diisocyanat mit einem mehrfunktionellen Alkohol im Verhältnis OH-Gruppen : NCO-Gruppen kleiner 1 umsetzt und in dem so entstandenen Präpolymeren ein dicyclisches Diisocyanat mit einem mehrfunktionellen Alkohol im Verhältnis OH-Gruppen : NCO-Gruppen kleiner 1 zur Reaktion bringt, wobei gewünschtenfalls übliche Katalysatoren und/oder erhöhte Temperaturen angewendet werden.

. . .

- 4 -

Die Erfindung geht zunächst von der literaturbekannten Tatsache aus, daß Polyurethan-Präpolymeren mit Isocyanatendgruppen dann eine vergleichsweise niedere Viskosität aufweisen, wenn sie sich von einem monocyclischen Diisocyanat ableiten. Es wird daher in einer ersten Reaktionsstufe ein derartiges Präpolymeres hergestellt und das Einsatzmolverhältnis so gewählt, daß ein zumindest bei Reaktionstemperatur noch fließfähiges Produkt entsteht. In diesen Präpolymeren als "Lösungsmittel" oder Reaktivverdünner wird in einer zweiten Reaktionsstufe die Umsetzung eines mehrfunktionellen Alkohols mit einem dicyclischen Diisocyanat ausgeführt./Die Erfindung macht sich weiterhin die erhöhte Reaktivität der Isocyanatgruppen der dicyclischen Diisocyanate, verglichen mit den aus den monocyclischen Diisocyanaten entstammenden Isocyanatgruppen der Präpolymeren, zunutze. Es wird so erreicht, daß das Produkt der ersten Stufe (Reaktivverdünner) nicht oder nicht wesentlich mit der in der zweiten Stufe zugegebenen Polyol-Komponente reagiert. Da einerseits während der zweiten Reaktionsstufe der Restmonomergehalt des Reaktivverdünners weiter absinkt - zumal die im Reaktivverdünner als Restmonomere enthaltenen monocyclischen Diisocyanate Isocyanatgruppen höherer Aktivität aufweisen als der Reaktivverdünner selbst - und andererseits in der zweiten Reaktionsstufe höhermolekulare Präpolymere mit geringem Gehalt an Restmonomeren, die ohne Reaktivverdünner nicht mehr verarbeitbar wären, hergestellt werden können, werden insgesamt Präpolymermischungen mit stark vermindertem Restmonomergehalt erhalten.

Zur Durchführung des erfindungsgemäßen Verfahrens sind als monocyclische Diisocyanate besonders aromatische Verbindungen geeignet, welche zwei unterschiedlich reaktive Isocyanatgruppen aufweisen. Von großer technischer Bedeutung ist hier z.B. 2,4-Toluylendiisocyanat. Weiter geeignet sind aliphatische cyclische Diisocyanate wie z.B. Isophorondiisocyanat. Auch bei den aliphatischen Verbindungen sind solche mit unterschiedlicher Reaktivität der Isocyanatgruppen bevorzugt.

Die monocyclischen Diisocyanate können mit einer grossen Vielzahl von mehrfunktionellen Alkoholen umgesetzt werden. Geeignet sind in dieser Stufe aliphatische Alkohole mit 2 - 6, vorzugsweise 2 - 4 Hydroxylgruppen pro Molekül. Dabei können die verwendeten difunktionellen Alkohole 2 - 5 C-Atome, die Triole 3 - 6 C-Atome und die Tetraole 4 - 8 C-Atome aufweisen. Wenngleich primäre wie auch sekundäre Alkohole eingesetzt werden können, sind die sekundären bevorzugt. So können insbesondere die Umsetzungsprodukte niedermolekularer mehrfunktioneller Alkohole mit Alkylenoxiden mit bis zu 4 C-Atomen eingesetzt werden. Geeignet sind beispielsweise die Umsetzungsprodukte von Ethylenglykol, Propylenglykol, von den isomeren Butandiolen oder Hexandiolen mit Ethylenoxid, Propylenoxid und/oder Butenoxid. Ferner können die Umsetzungsprodukte trifunktioneller Alkohole wie Glycerin, Trimethylolethan und /oder Trimethylolpropan oder höher funktioneller Alkohole wie beispielsweise Pentaerythrit oder Zuckeralkoholen mit den genannten Alkenoxiden eingesetzt werden.

. . .

- 6 -

Besonders geeignet sind Polyetherpolyole mit einem Molekulargewicht von 100 - 5000.

Somit können je nach gewünschtem Molekulargewicht Anlagerungsprodukte von nur wenigen mol Ethylenoxid und/oder Propylenoxid pro mol oder aber von mehr als hundert mol Ethylenoxid und/oder Propylenoxid an niedermolekulare mehrfunktionelle Alkohole eingesetzt werden. Weitere Polyetherpolyole sind durch Kondensation von z. B. Glycerin oder Pentaerythrit unter Wasserabspaltung herstellbar. In der Polyurethan-CHemie gebräuchliche Polyole entstehen weiterhin durch Polymerisation von Tetrahydrofuran. Unter den genannten Polyetherpolyolen sind die Umsetzungsprodukte von mehrfunktionellen niedermolekularen Alkoholen mit Propylenoxid unter Bedingungen, bei denen zumindest teilweise sekundäre Hydroxylgruppen entstehen, besonders geeignet. Weitere geeignete Polyetherpolyole sind z. B. in der deutschen Offenlegungsschrift 25 59 759 beschrieben.

Zur Umsetzung mit monocyclischen Diisocyanaten sind weiterhin Polyesterpolyole mit Molekulargewicht 200 - 10 000 geeignet. Nach einer ersten Ausführungsform können Polyesterpolyole verwendet werden, die durch Umsetzung von niedermolekularen Alkoholen, insbesondere von Ethylenglykol, Propylenglykol, Glycerin oder Trimethylolpropan mit 1 - 50 mol Caprolacton entstehen. Weitere geeignete Polyesterpolyole sind durch Polykondensation herstellbar. So können difunktionelle und/oder trifunktionelle Alkohole mit einem Unterschuß an Dicarbonsäuren und/oder Tricarbonsäuren oder deren reaktiven Derivaten zu Polyesterpolyolen kondensiert

. . .

werden. Geeignete Dicarbonsäuren sind hier Bernsteinsäure und ihre höheren Homologen mit bis zu 12 C-Atome, ferner ungesättigte Dicarbonsäuren wie Maleinsäure oder Fumarsäure sowie aromatische Dicarbonsäuren, insbeson- dere die isomeren Phthalsäuren. Als Tricarbonsäuren sind Zitronensäure oder Trimellitsäure geeignet. Im Sinne der Erfindung besonders geeignet sind Polyesterpolyole aus den genannten Dicarbonsäuren und Glycerin, welche einen Restgehalt an sekundären OH-Gruppen aufweisen.

Um Umsetzungsprodukte von monocyclischen Diisocyanaten mit mehrfunktionellen Alkoholen zu erhalten, welche erfindungsgemäß in der zweiten Reaktionsstufe als Lösungsmittel "oder Reaktivverdünner" eingesetzt werden können, ist es wichtig, ein bestimmtes Verhältnis zwischen Hydroxylgruppen und Isocyanantgruppen einzuhalten. So entstehen ausreichend niedrigviskose Produkte, wenn die Anzahl der OH-Gruppen geteilt durch die Anzahl der Isocyanatgruppen zwischen 0,4 und 0,8, vorzugsweise aber zwischen 0,5 und 0,7 liegt.

Zur Durchführung der zweiten Stufe des erfindungsgemässen Verfahrens werden in den in der ersten Stufe erhaltenen Präpolymeren dicyclische Diisocyanate mit mehrfunktionellen Alkoholen zur Reaktion gebracht. Die Menge der dicyclischen Diisocyanate, bezogen auf die Gesamtmenge der Diisocyanate in Stufe 1 und 2, beträgt 5 bis 80 Gew.-%, vorzugsweise 5 bis 60 Gew.-% und insbesondere 10 bis 40 Gew.-%. Für die Reaktion der Stufe 2 be- trägt das Molverhältnis Hydroxylgruppen : Isocyanat- gruppen, ausgedrückt als Quotient der OH-Gruppen geteilt durch Isocyanatgruppen 0,65 - 0,8 , vorzugsweise 0,70 - 0,75.

. . .

- 8 -

Bei der Auswahl der dicyclischen Diisocyanate ist es wichtig, daß die Reaktivität ihrer Isocyanatgruppen gegenüber Hydroxylgruppen höher liegt als die der endständigen Isocyanatgruppen des Reaktivverdünners. Somit sind in erster Linie Diaryldiisocyanate geeignet. Bevorzugt sind 4,4-Diphenylmethandiisocyanat und/oder substituierte 4,4-Diphenylmethandiisocyanate. Etwas weniger geeignet ist 4,4-Dicyclohexylmethandiisocyanat, welches formal als Hydrierungsprodukt des ersten aufzufassen ist.

Zur Umsetzung der dicyclischen Diisocyanate können die vorstehend bei Reaktionsstufe 1 beschriebenen mehrfunktionellen Alkohole verwendet werden. Weiter geeignet sind hier jedoch auch niedermolekulare mehrfunktionelle Alkohole, wie z. B. Ethylenglykol, Propylenglykol, deren Oligomere, die isomeren Butandiole oder Hexandiole, ferner trifunktionelle Alkohole, wie Glycerin, Trimethylolethan oder Trimethylolpropan sowie höher funktionelle Alkohole wie Pentaerythrit und/oder Zuckeralkohole.

Zur Durchführung des erfindungsgemäßen Verfahrens ist es weiterhin bevorzugt, die Umsetzung der Diisocyanate mit den mehrfunktionellen Alkoholen bei erhöhter Temperatur durchzuführen. Geeignet sind Temperaturen zwischen 60 und 80°C. Nach einer besonders bevorzugten Ausführungsform wird die erste Stufe bei einer Temperatur zwischen 50 und 90°C und einer Reaktionszeit von 2-20 Stunden durchgeführt. Sodann werden bei Temperaturen zwischen 60 und 80°C die Ausgangsstoffe für die zweite Reaktionsstufe zugegeben, 15 Minuten homogenisiert und dann die Reaktionsgemische sich selbst überlassen. Das Reaktionsende ist erreicht, wenn die Anzahl der Isocyanatgruppen nicht weiter absinkt. Dies kann analytisch durch Titration der Isocyanatgruppen festgestellt werden und ist meist nach 2 - 5 Tagen bei Raumtemperatur der Fall.

Die Verfahrensprodukte weisen einen substantiell verminderten Anteil an freien, monomeren, monocyclischen aber auch an freien, monomeren dicyclischen Diisocyanaten auf. So tritt bei großflächiger Anwendung der Präpolymeren bei erhöhten Temperaturen, also etwa 80 - 100°, keine Belästigung durch flüchtige monocyclische Diisocyanate auf.

Die erfindungsgemäßen Präpolymeren eignen sich in Substanz oder als Lösung in organischen Lösungsmitteln zum Verkleben von Kunststoffen, insbesondere zum Kaschieren von Kunststoffolien. Hierbei können übliche Härter, etwa mehrfunktionelle höhermolekulare Alkohole zugesetzt werden (2-Komponenten-Systeme) oder aber Oberflächen mit definiertem Feuchtigkeitsgehalt mit den erfindungsgemäßen Produkten direkt verklebt werden. Mit den erfindungsgemäßen Produkten hergestellte Folienverbunde zeigen hohe

...

Verarbeitungssicherheit beim Heissiegeln. Dies ist möglicherweise auf den verminderten Anteil migrationsfähiger niedermolekularer Produkte in den Präpolymeren zurückzuführen. Eine vorteilhafte Verarbeitungstemperatur für die erfindungsgemäßen Klebstoffe liegt bei derartigen Verfahren zwischen 70 und 120°C.

0118065
HENKEL KGaA
ZR-FE/Patente

- 11 -

B E I S P I E L E

## Beispiel 1:

In einem Reaktionsgefäß mit Rührer wurden 600 g Polypropylenglykol (0,31 mol, OH-Zahl 58, 360 ppm Wasser) mit 94,06 g 2,4-Toluylendiisocyanat (48,25 % NCO, 0,54 mol) vermischt. Die Reaktionsmischung wurde auf 65 °C erwärmt und bei dieser Temperatur 16 Stunden belassen. Es entstand ein Polyurethan-Präpolymer mit einer Viskosität von 6,0 Pa.s bei 23 °C und einem Restmonomergehalt von 0,2 % 2,4-Toluylendiisocyanat. Das Präpolymer hatte 2,62 % NCO gesamt. In das Präpolymer wurden 171,61 g 4,4-Diphenylmethandiisocyanat (33,5 % NCO, 0,686 mol) eingebracht und durch Erwärmen auf 70 °C geschmolzen. Nach dem Zufügen von 291,11 g Polytetrahydrofuran (Polytetramethylenglykol, OH-Zahl 176, 398 ppm Wasser, 0,456 mol) wurde bei 70 °C homogen verrührt und die Mischung ohne Heizung sich selbst überlassen. Das entstandene Mischpräpolymer zeigte nach einer Woche Lagerung eine Viskosität von 2,50 Pa.s bei 75 °C und Isocyanatrestmonomergehalte von 0,01 % 2,4-Toluylendiisocyanat (unterhalb der Nachweisgrenze) und 2,4 % 4,4-Dipheylmethandiisocyanat. Der titrierbare NCO-Gehalt lag bei 3,17 %.

...

- 12 -

Beispiel 2:

Beispiel 1 wurde wiederholt, jedoch wurde in der ersten Stufe von einem aliphatischen Adipinsäurepolyester ausgegangen.(Einwaage: 500 g, OH-Zahl 56, 334 ppm Wasser). Durch Reaktion bei 65 °C mit 78,4 g 2,4-Toluylendiisocyanat (0,45 mol) wurde ein Reaktivverdünner mit einer Viskosität von 7,85 Pa.s bei 75 °C erhalten. Darin wurden in der 2. Reaktionsstufe 92,54 g 4,4'-Diphenylmethandiisocyanat (0,37 mol) bei 70 °C aufgeschmolzen und mit 155,34 g Polytetramethylenglykol (OH-Zahl 176, 398 ppm Wasser, 0,244 mol) 2 Stunden lang bei 70 °C zur Reaktion gebracht. Das Reaktionsgemisch wurde dann 2 Tage sich selbst überlassen. Danach wurden folgende Werte bestimmt:

% NCO = 2,77, % monomeres 2,4-Toluylendiisocyanat < 0,03
% monomeres 4,4'-Diphenylmethandiisocyanat: 1,5,
Viskosität: 7,15 Pa.s bei 90 °C.

Beispiel 3:

Es wurde wie in Beispiel 1 beschrieben 800 g eines Präpolymeren hergestellt. Darin wurden 93,0 g 4,4'-Diphenylmethandiisocyanat (0,37 mol) und 107,0 g Polypropylenglykol (145 ppm Wasser, 0,246 mol) bei 70 °C 2 Stunden lang verrührt. Das Reaktionsgemisch wurde sodann 3 Tage bei Raumtemperatur sich selbst überlassen. Danach wurden die folgenden analytischen Werte bestimmt:

% monomeres 2,4-Toluylendiisocyanat < 0,01,
monomeres 4,4'-Diphenylmethandiisocyanat: 1,3.

. . .

- 13 -

Beispiel 4:

Es wurde wie in Beispiel 2 zunächst ein Polyurethanpräpolymer aus einem aliphatischen Adipinsäurepolyester und
2,4-Toluylendiioscyanat hergestellt. In 1200 g dieses
Polyurethanpräpolymeren würden dann 276 g 4,4-Diphenylmethandiisocyanat (1,103 mol) und 524 g eines Adipinsäurepolyesters (aliphatisch, OH-Zahl 154, 226 ppm Wasser,
0,72 mol) bei 70 °C 2 Stunden lang gerührt und anschließend
2 Tage bei Raumtemperatur stehengelassen. Die folgenden
analytischen Kennzahlen wurden ermittelt:
% NCO = 2,83, % monomeres 2,4-Toluylendiisocyanat: 0,02,
% monomeres 4,4-Diphenylmethandiisocyanat: 2,3, Viskosität: 9,26  Pa.s bei 90 °C.

Die Restmonomergehalte wurden durch Gelchromatographie
bestimmt. Die %-Angaben beziehen sich auf die Gesamtmenge an Präpolymer.

- 14 -

Patentansprüche

1. Verfahren zur Herstellung von Polyurethan-Präpolymeren mit endständigen Isocyanatgruppen aus mono- und dicyclischen Diisocyanaten, dadurch gekennzeichnet, daß man in einer ersten Stufe ein monocyclisches Diisocyanat mit einem mehrfunktionellen Alkohol im Verhältnis OH-Gruppen : NCO-Gruppen kleiner 1 umsetzt und in dem so entstandenen Präpolymeren ein dicyclisches Diisocyanat mit mehrfunktionellen Alkoholen im Verhältnis OH-Gruppen : NCO-Gruppen kleiner 1 zur Reaktion bringt, wobei gewünschtenfalls übliche Katalysatoren und/oder erhöhte Temperaturen angewendet werden.

2. Verfahren nach Anspruch 1, dadurch gekennzeichnet, daß als monocyclische Diisocyanate Toluylendiisocyanat und/oder Isophorondiisocyanat eingesetzt werden und als dicyclische Diisocyanate 4,4'-Diphenylmethandiisocyanat und/oder 4,4'-Dicyclohexylmethandiisocyanat eingesetzt werden.

3. Verfahren nach den Ansprüchen 1 - 2, dadurch gekennzeichnet, daß das Verhältnis OH-Gruppen : NCO-Gruppen bei der ersten Umsetzung zwischen 0,4 und 0,8, vorzugsweise zwischen 0,5 und 0,7 und bei der zweiten Umsetzung zwischen 0,65 und 0,80, vorzugsweise zwischen 0,70 und 0,75 liegt.

4. Verfahren nach den Ansprüchen 1 - 3, dadurch gekennzeichnet, daß in der ersten Umsetzungsstufe ein zumindest bei Temperaturen oberhalb Raumtemperaturen

. . .

- 15 -

noch fließfähiges Präpolymer erzeugt wird, das als
Reaktionsmedium für die 2. Umsetzungsstufe dient.

5. Verfahren nach den Ansprüchen 1 - 4, dadurch gekennzeichnet, daß als mehrfunktionelle Alkohole primäre oder sekundäre aliphatische Alkohole mit 2 - 6, vorzugsweise 2 - 4, Hydroxylgruppen eingesetzt werden.

6. Verfahren nach Anspruch 5, dadurch gekennzeichnet, daß als mehrfunktionelle Alkohole Diole mit 2 - 5 C-Atomen, Triole mit 3 - 6 C-Atomen, Tetraole mit 4 - 8 C-Atomen, OH-funktionelle Polyester mit Molekulargewicht 200 - 10000 eingesetzt werden.

7. Verfahren nach den Ansprüchen 1 - 6, dadurch gekennzeichnet, daß als mehrfunktionelle Alkohole OH-funktionelle Polyether-Polyole mit einem Molekulargewicht von 100 - 5000 eingesetzt werden.

8. Verfahren nach den Ansprüchen 1 - 7, dadurch gekennzeichnet, daß man 5 - 80 Gew.-% dicyclisches Diisocyanat, bezogen auf die Gesamtdiisocyanatmenge einsetzt.

9. Verfahren nach den Ansprüchen 1 - 8, dadurch gekennzeichnet, daß die Umsetzung der Diisocyanate mit den mehrfunktionellen Alkoholen in beiden Reaktionsstufen bei Temperaturen zwischen 50 und 100$^{\circ}$, vorzugsweise zwischen 60 und 80$^{\circ}$, durchgeführt wird.

...

10 . Verwendung der Verfahrensprodukte nach den Ansprüchen 1 - 9 zusammen mit üblichen Härtern und/oder Feuchtigkeit, gewünschtenfalls in Gegenwart von organischen Lösungsmitteln und üblichen Beschleunigern zum Verkleben von Kunststoffgegenständen, insbesondere Folien.

11. Ausgestaltung nach Anspruch 10, dadurch gekennzeichnet, daß man die Verklebung bei Temperaturen zwischen 70 und 120°C durchführt.

Sd 230/438539 4 04 83